# EUROPÄISCHE PATENTANMELDUNG

(11) **EP 4 706 926 A1**
(43) Veröffentlichungstag der Anmeldung: **11.03.2026**
(21) Anmeldenummer: 25193737.1
(22) Anmeldetag: 04.08.2025
(51) Int. Cl.: B29B 7/26, B29B 7/18

(54) **MISCHVORRICHTUNG ZUM MISCHEN UND VERARBEITEN EINER MISCHUNG UND VERFAHREN ZUM AUFBEREITEN EINER MISCHVORRICHTUNG**

(30) Priorität: 05.09.2024 DE 102024208436
(71) Anmelder: Continental Reifen Deutschland GmbH, 30175 Hannover (DE)
(72) Erfinder: Kuck, Detlef, 30175 Hannover (DE); Arand, Jörg, 30175 Hannover (DE)
(74) Vertreter: Continental Corporation

(57) **Zusammenfassung**

Eine Mischvorrichtung (1) zum Mischen und Verarbeiten einer Mischung umfasst eine Mischkammer (2) mit einem ersten und einem zweiten Mischkammerabschnitt. Die beiden Mischkammerabschnitte (3, 4) weisen eine jeweilige Mischkammerwand (8) auf, die einem Innenraum der Mischkammer (2) zugewandt ist. Die Mischvorrichtung (1) umfasst ferner einen Klappsattel (5), der mit der Mischkammer (2) gekoppelt ist und der um eine Drehachse (R) drehbar ausgebildet ist, sodass der Klappsattel (5) in einem geschlossenen Zustand einen Bodenabschnitt der Mischkammer (2) einrichtet und die beiden Mischkammerabschnitte (3, 4) abschnittsweise begrenzt, und in einem geöffneten Zustand einen Öffnungsbereich der Mischkammer (2) zum Austreten der Mischung freigibt. Die Mischvorrichtung (1) umfasst außerdem ein vorgeformtes Verkleidungselement (10), das an einer Mischkammerwand (8) angeordnet ist.

## Beschreibung

Die vorliegende Erfindung betrifft eine Mischvorrichtung zum Mischen und Verarbeiten einer Mischung und ein Verfahren zum Aufbereiten einer Mischvorrichtung.

Fahrzeuge weisen Reifen auf, die üblicherweise ein Gummibauteil in Form eines Kautschuk-Reifenprofils haben. Bei der Herstellung von Reifen oder anderen Gummibauteilen ist eine Fertigung erstrebenswert, die eine kostengünstige und zudem zuverlässige Ausbildung des jeweiligen Produkts ermöglicht.

Es ist eine Aufgabe, die der Erfindung zugrunde liegt, eine Mischvorrichtung und ein Verfahren zum Aufbereiten einer Mischvorrichtung bereitzustellen, die jeweils auf nachhaltige Weise zu einem kostengünstigen und zuverlässigen Herstellen eines Reifens beitragen können.

Die Aufgabe wird durch die jeweiligen Merkmale der unabhängigen Patentansprüche gelöst. Vorteilhafte Weiterbildungen sind in den jeweils abhängigen Patentansprüchen angegeben.

Gemäß einem Aspekt der Erfindung umfasst eine Mischvorrichtung zum Mischen und Verarbeiten einer Mischung eine Mischkammer mit einem ersten und einem zweiten Mischkammerabschnitt, wobei der erste und zweite Mischkammerabschnitt jeweils eine Mischkammerwand aufweisen, die einem Innenraum der Mischkammer zugewandt ist. Die Mischvorrichtung umfasst weiter einen Klappsattel, der mit der Mischkammer gekoppelt ist und der um eine Drehachse drehbar ausgebildet ist, sodass der Klappsattel von einem geschlossenen Zustand in einen geöffneten Zustand überführbar ist und umgekehrt. In dem geschlossenen Zustand richtet der Klappsattel einen Bodenabschnitt der Mischkammer ein und begrenzt die beiden Mischkammerabschnitte abschnittsweise. In dem geöffneten Zustand ist der Klappsattel gedreht oder aufgeschwenkt und gibt einen Öffnungsbereich der Mischkammer zum Austreten der Mischung frei. Die Mischvorrichtung umfasst außerdem ein vorgeformtes Verkleidungselement, das an einer Mischkammerwand angeordnet ist.

Mittels der beschriebenen Vorrichtung kann zu einem verbesserten Verarbeitungsprozess einer Mischung beigetragen werden, welche insbesondere als eine Reifen- oder Kautschuk-Mischung für ein Gummibauteil realisiert sein kann. Somit kann zu einem kostengünstigen und zuverlässigen Herstellungsprozess eines Reifens für ein Kraftfahrzeug beigetragen werden. Das Verkleidungselement realisiert eine Auskleidung an einer verschlissenen Innenwand des zugehörigen Mischkammerabschnitts und trägt somit als Aufbereitung zu einer nachhaltigen Mischvorrichtung bei.

Die Mischvorrichtung ist üblicherweise als zylinderförmiger Kessel ausgebildet. Die Mischkammerabschnitte können daher in Bezug auf eine Mittelachse und eine diesbezüglich symmetrische Ausbildung auch als Mischkammerhälften bezeichnet werden. Die Mischvorrichtung kann als ein Innenmischer eines Mischsystems vorgesehen sein. Das Verkleidungselement ist insbesondere als gebogene Platte vorgeformt, die einen Kammerwandabschnitt nachbildet und zum Beispiel in etwa einer halben Zylindermantelfläche entspricht. Das Verkleidungselement ist bevorzugt aus Stahl gefertigt oder weist Stahl auf. Beispielsweise ist das Verkleidungselement als 10 mm starke Hardox^{®}-Platte ausgebildet.

Alternativ weist das Verkleidungselement als gebogene, vorgeformte Platte eine Dicke oder Stärke von 5-15 mm auf. Die Dicke oder Stärke beziehen sich üblicherweise auf die geringste Ausdehnung einer Platte, deren lateralen Ausdehnungen gegenüber der Dicke dominieren. Die Dicke des Verkleidungselements ist insbesondere in Abstimmung auf das Material und die Art des Anbringens an der Mischkammerwand ausgebildet.

Gemäß einer weiteren Weiterbildung der Mischvorrichtung ist eine Oberfläche an einer Innenseite der Mischkammerwand bis zu einer vorgegebenen Tiefe abgetragen, beispielsweise abgeschliffen oder abgedreht, und das vorgeformte Verkleidungselement ist auf der abgetragenen Innenseite angeordnet. Insbesondere die verschlissene Mischkammerwand so tief entfernt, dass die Dicke des Verkleidungselements im Wesentlichen wieder zu dem ursprünglichen Zustand der Mischkammervorrichtung führt. Ein für die Mischung vorgesehener Innenraum ist demgemäß zumindest annäherungsweise gleich dem vor der Aufbereitung.

Gemäß einer weiteren Weiterbildung der Mischvorrichtung ist das vorgeformte Verkleidungselement mittels abschnittsweise Schweißen an der Mischkammerwand befestigt. Das Verkleidungselement ist in seiner Form an die Mischkammerwand angepasst und es kann mittels lokalem Schweißen an mehreren Stellen eine stoffschlüssige Verbindung ausgebildet werden, die einen zuverlässigen Halt einrichtet. Zur besseren Wärmeübertragung kann zwischen der aufzubereitenden Mischkammerwand und dem Verkleidungselement eine Wärmeleitpaste aufgetragen werden. Es ist daher nicht erforderlich, das Verkleidungselement vollflächig oder überwiegend mit der Mischkammerwand zu verschweißen.

Alternativ oder zusätzlich kann das vorgeformte Verkleidungselement eine Mehrzahl von Durchgangsöffnungen für Befestigungsmittel aufweisen und das Verkleidungselement mittels Befestigungsmittel mit der Mischkammerwand verbinden. Die Befestigungsmittel sind insbesondere als Senkkopfschrauben oder Abreißschrauben realisiert, die sich durch eine jeweilige Durchgangsöffnung hindurch erstrecken und das Verkleidungselement an der Mischkammerwand befestigen. Bei Abreißschrauben wird nach dem Verschrauben des Verkleidungselements an der Mischkammerwand ein Kopfabschnitt entfernt. Vorzugsweise wird der verbleibende Teil der Abreißschraube bzw. das Befestigungsmittel nach dem Befestigen des Verkleidungselements an der Mischkammerwand bearbeitet und überschweißt, sodass eine vorgegebene glatte Oberfläche des Verkleidungselements, die dem Innenraum der Mischkammer zugewandt ist, ausgebildet wird. Die Oberfläche weist bevorzugt keine Spalten, Risse und/oder Kanten auf, die einen Mischprozess nachteilig beeinflussen können.

Gemäß einem weiteren Aspekt der Erfindung umfasst ein Verfahren ein Bereitstellen einer aufzubereitenden Mischvorrichtung mit einem ersten Mischkammerabschnitt und einem zweiten Mischkammerabschnitt. Die beiden Mischkammerabschnitte weisen eine jeweilige Mischkammerwand auf, die einem Innenraum der Mischkammer zugewandt ist. Zum Beispiel haben sich durch den Betrieb an einer Mischkammerwand Risse oder Abplatzungen gebildet, die gemäß diesem Verfahren aufbereitet werden kann. Das Verfahren umfasst daher weiter ein Bereitstellen eines vorgeformten Verkleidungselements, insbesondere in Form einer gebogenen Stahlplatte. Das Verfahren umfasst außerdem ein Anbringen des Verkleidungselements an der der Mischkammerwand des zugehörigen Mischkammerabschnitts. Das Anordnen und Befestigen des Verkleidungselements an der Mischkammerwand kann insbesondere mittels Schweißen und/oder Schrauben erfolgen.

Gemäß einer bevorzugten Weiterbildung umfasst das Verfahren ein Abtragen einer Oberfläche an einer Innenseite der aufzubereitenden Mischkammerwand bis zu einer vorgegebenen Tiefe, und ein Anordnen des Verkleidungselements an der abgetragenen Innenseite der Mischkammerwand.

Es ist eine Erkenntnis im Zusammenhang mit der vorliegenden Erfindung, dass die Mischkammerwände eines Mischers durch den Mischprozess und der üblicherweise relativ zähen Mischmasse großen Belastungen ausgesetzt ist. Um diesen Belastungen standzuhalten, weist die Mischkammer des Mischers innen zum Beispiel eine mehrere Millimeter starke aufgeschweißte Hartpanzerung auf. Aber auch eine solche Panzerung reibt sich im Laufe des Betriebs ab und es kommt zu Durchbrüchen in der Oberfläche, die sich bis hin darunter verlaufenden Kühlbohrungen erstrecken können. Dies kann sogar zu einem Eintreten von Kühlmittel in den Innenraum des Mischers führen, welches den Mischprozess nachteilig beeinflusst oder unbrauchbar macht. Die Mischkammer ist dann verschlissen und muss ausgetauscht werden. Bei konventionellen Systemen wird die komplette Mischkammerhälfte verworfen. In der Regel werden sogar beide Mischkammerhälften verworfen, sodass eine komplett neue Mischkammer erforderlich ist und entsprechend hohen Zeit- und Kostenaufwand begründet. Eine Erneuerung der Hartpanzerung durch Aufschweißen ist nicht möglich oder zumindest ist davon abzuraten, weil dadurch zu viel Hitze in das Material der Mischkammerwand eingebracht werden kann und sich die Mischkammer verzieht. Außerdem können sich Härterisse bilden, die bis zu den Kühlbohrungen durchwandern können.

Mittels der beschriebenen aufbereiteten Mischvorrichtung und dem korrespondierendem Aufbereitungsverfahrens kann eine Lebensdauer der Mischkammerhälften deutlich verlängert werden. Es ist daher nicht erforderlich eine vollständige Mischkammerhälfte oder sogar die komplette Mischkammer als Ausschuss zu verwerfen und zu erneuern. Mit dem beschriebenen Verfahren können Mischkammerhälften, nachdem sie verschlissen sind, immer wieder aufgearbeitet werden. Somit wird ein Beitrag zu einer nachhaltigen Nutzung geleistet und zudem können im Vergleich zu einer Neuanschaffung Kosten signifikant reduziert werden.

Das Verkleidungselement stellt, insbesondere als eine vorgeformte Platte aus einem abriebfesten Stahl, eine einfache und zuverlässige Reparaturmöglichkeit dar, die kostengünstig und nachhaltig ist. Zunächst wird die ursprünglich aufgeschweißte Hartpanzerung mechanisch bis zu einer vordefinierten Tiefe gleichmäßig entfernt werden. Dann wird die vorgeformte Platte mittels stellenweise Schweißen und/oder mittels Abreißschrauben an der Innenseite der Mischkammerhälfte befestigt. Die Ränder der Platte, und sofern Abreißschrauben verwendet werden, werden die Köpfe der Abreißschrauben verschweißt. Zur besseren Wärmeübertragung wird vorzugsweise zwischen der aufzubereitenden Mischkammerwand und der Stahlplatte eine Wärmeleitpaste aufgetragen.

Im Folgenden sind Ausführungsbeispiele der Erfindung anhand schematischer Zeichnungen erläutert. Es zeigen:
- Figur 1: ein schematisches Ausführungsbeispiel einer Mischvorrichtung zum Verarbeiten einer Mischung,
- Figur 2: ein schematisches Ausführungsbeispiel einer Mischkammerhälfte einer Mischvorrichtung, und
- Figur 3: ein Ablaufdiagramm für ein Verfahren zum Aufbereiten einer Mischvorrichtung.

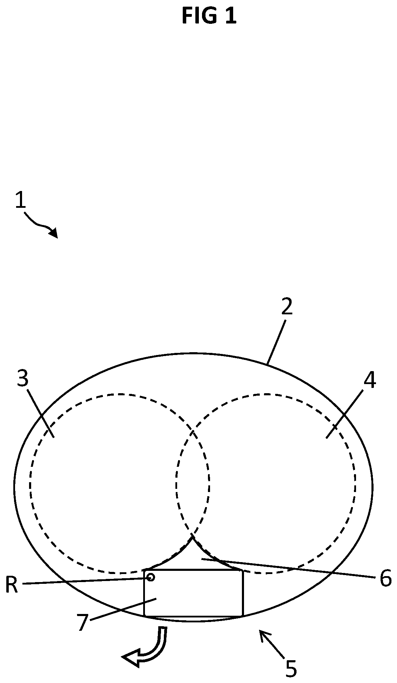

Figur 1 zeigt schematisch ein Ausführungsbeispiel einer Mischvorrichtung 1 zum Mischen und Verarbeiten einer Mischung, zum Beispiel einer Kautschuk-Mischung für Reifenherstellung. Die Mischvorrichtung 1 weist eine Mischkammer 2 mit einem ersten Mischkammerabschnitt 3und einem zweiten Mischkammerabschnitt 4 auf, die bei einem üblicherweise symmetrischen Aufbau auch als Mischkammerhälften bezeichnet werden können.

Die Mischvorrichtung 1 umfasst weiter einen Klappsattel 5, der mit der Mischkammer 2 gekoppelt ist und der um eine Drehachse R drehbar ausgebildet ist. Der Klappsattel 5 ist demgemäß zwischen einem geschlossenen Zustand und einem geöffneten Zustand überführbar. In dem geschlossenen Zustand bildet der Klappsattel 5 einen Bodenabschnitt der Mischkammer 2 ein und begrenzt einen jeweiligen Abschnitt der beiden Mischkammerhälften 3 und 4. In dem geöffneten Zustand ist ein Öffnungsbereich der Mischkammer 2 zum Austreten der Mischung freigegeben. In Figur 1 ist die Öffnungsrichtung durch ein Pfeilsymbol angedeutet.

Der Klappsattel 5 umfasst ein Satteldach 6, das den Mischkammerhälften 3, 4 zugewandt ist, und einen Sattelträger 7, der das Satteldach 6 trägt und der mit der Drehachse R gekoppelt ist. Das Satteldach 6 weist einen erhöhten Mittelbereich auf und ist im Wesentlichen derart geformt, dass es eine Innenkontur der jeweiligen Mischkammerhälfte 3, 4 weiterführt. In den Mischkammerhälften 3, 4 sind üblicherweise Mischrotoren angeordnet, die die Mischung durchwälzen. Entsprechend sind die Mischkammerhälften 3, 4 im Wesentlichen zylinderförmig ausgebildet und weisen in Projektionen einen Überlappungsbereich auf.

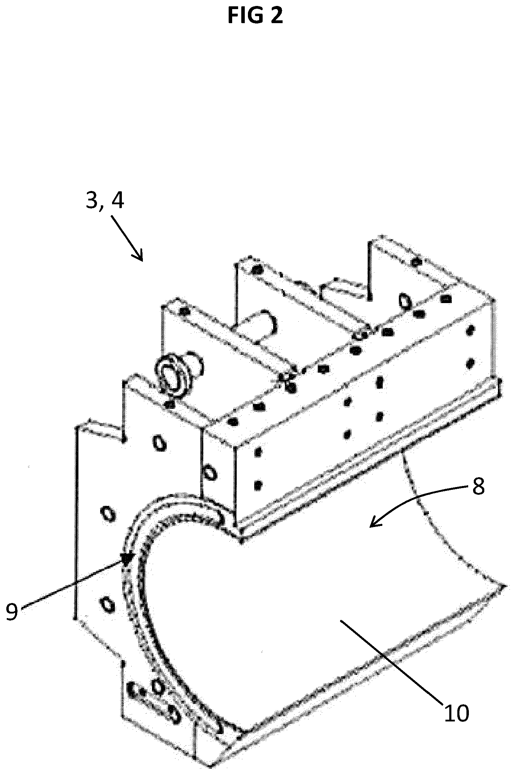

Die Mischvorrichtung 1 umfasst außerdem ein vorgeformtes Verkleidungselement 10, das an einer Mischkammerwand 8 angeordnet ist (s. Figur 2). Die Mischvorrichtung 1 ist somit aufbereitet und kann zu einem kostengünstigen und nachhaltigen Betrieb für weitere Mischprozesse eingesetzt werden. Das Verkleidungselement 10 ist als vorgeformte Platte aus einem abriebfesten Stahl mit einer vorgegebenen Stärke oder Dicke bereitgestellt und an der Mischkammerwand 8 angeschweißt und/oder angeschraubt.

Die Mischvorrichtung 1 umfasst zudem ein Kühlsystem mit Kühlmitteleitungen, die eine vorgegebene Kühlung während des Mischens einrichten. In Figur 2 ist eine Kühlmittelbohrung 9 illustriert, die entlang eines Halbkreissegments mehrere Kühlleitungen oder Kühlbohrungen umfasst, die unterhalb der innenliegenden Oberfläche der Mischkammerwand 8 verlaufen.

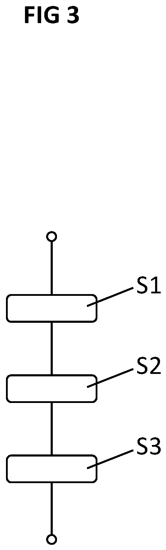

Ein Ablaufdiagramm für ein Verfahren zum Aufbereiten einer Mischvorrichtung bzw. zum Ausbilden der Mischvorrichtung 1 kann gemäß Figur 3 wie folgt durchgeführt werden.

In einem Schritt S1 wird eine auszubereitende Mischvorrichtung bereitgestellt, die Mischkammerhälften mit Mischkammerwänden umfasst, die Risse oder Durchbrüche an der innenliegenden Oberfläche aufweist.

In einem Schritt S2 wird die beschädigte Oberfläche der jeweiligen Mischkammerwände, die zum Beispiel eine aufgeschweißte Hartpanzerung umfasst, mechanisch bis zu einer vordefinierten Tiefe gleichmäßig entfernt.

In einem Schritt S3 wird als das Verblendungselement 10 eine vorgeformte Stahlplatte bereitgestellt und mittels Schweißen und/oder mittels Abreißschrauben an der Innenseite der Mischkammerhälfte 3,4 befestigt. Zur besseren Wärmeübertragung kann zwischen der aufzubereitenden Mischkammerwand 8 und der Stahlplatte eine Wärmeleitpaste aufgetragen werden.

### Bezugszeichenliste

- 1: Mischvorrichtung
- 2: Mischkammer
- 3: erster Mischkammerabschnitt
- 4: zweiter Mischkammerabschnitt
- 5: Klappsattel
- 6: Satteldach
- 7: Sattelträger
- 8: Mischkammerwand
- 9: Kühlmittelbohrung
- 10: Verkleidungselement

- R: Drehachse des Klappsattels
- S(i): Schritte eines Verfahrens zum Aufbereiten einer Mischvorrichtung

## Patentansprüche

1. Mischvorrichtung (1) zum Mischen und Verarbeiten einer Mischung, aufweisend:
- eine Mischkammer (2) mit einem ersten Mischkammerabschnitt (3) und einem zweiten Mischkammerabschnitt (4), wobei der erste und zweite Mischkammerabschnitt (3, 4) eine jeweilige Mischkammerwand (8) aufweist, die einem Innenraum der Mischkammer (2) zugewandt ist,
- einen Klappsattel (5), der mit der Mischkammer (2) gekoppelt ist und der um eine Drehachse (R) drehbar ausgebildet ist, sodass der Klappsattel (5) in einem geschlossenen Zustand einen Bodenabschnitt der Mischkammer (2) einrichtet und die beiden Mischkammerabschnitte (3, 4) abschnittsweise begrenzt, und in einem geöffneten Zustand einen Öffnungsbereich der Mischkammer (2) zum Austreten der Mischung freigibt, und
- ein vorgeformtes Verkleidungselement (10), das an einer Mischkammerwand (8) angeordnet ist.

2. Mischvorrichtung (1) nach Anspruch 1, bei der das Verkleidungselement (10) als gebogene Platte vorgeformt ist, die einen Abschnitt einer zylinderförmigen Mantelfläche bildet.

3. Mischvorrichtung (1) nach einem der vorhergehenden Ansprüche, bei der das Verkleidungselement (10) als gebogene Platte vorgeformt ist, die aus Stahl gefertigt ist oder Stahl aufweist.

4. Mischvorrichtung (1) nach einem der vorhergehenden Ansprüche, bei der das Verkleidungselement (10) als gebogene Platte vorgeformt ist, die eine Dicke von 5-15 mm aufweist.

5. Mischvorrichtung (1) nach einem der vorhergehenden Ansprüche, bei der eine Oberfläche an einer Innenseite der Mischkammerwand (8) bis zu einer vorgegebenen Tiefe abgetragen ist und das vorgeformte Verkleidungselement (10) auf der abgetragenen Innenseite angeordnet ist.

6. Mischvorrichtung (1) nach einem der vorhergehenden Ansprüche, bei der das vorgeformte Verkleidungselement (10) mittels abschnittsweise Schweißen an der Mischkammerwand (8) befestigt ist.

7. Mischvorrichtung (1) nach einem der vorhergehenden Ansprüche, bei der das vorgeformte Verkleidungselement (10) eine Mehrzahl von Durchgangsöffnungen für Befestigungsmittel aufweist und das Verkleidungselement (10) mittels Befestigungsmittel, die sich durch eine jeweilige Durchgangsöffnung hindurch erstrecken, mit der Mischkammerwand (8) verbunden ist.

8. Mischvorrichtung (1) nach Anspruch 7, bei der die Befestigungsmittel als Abreißschrauben realisiert sind, deren Kopfabschnitt nach dem Verschrauben des Verkleidungselements (10) an der Mischkammerwand (8) entfernt ist.

9. Mischvorrichtung (1) nach Anspruch 7 oder 8, bei der die Befestigungsmittel nach dem Befestigen des Verkleidungselements (10) an der Mischkammerwand (8) bearbeitet und überschweißt sind, sodass eine Oberfläche des Verkleidungselements (10), die dem Innenraum der Mischkammer (2) zugewandt ist, vorgegeben glatt ausgebildet ist.

10. Verfahren zum Aufbereiten einer Mischvorrichtung (1), umfassend:
- Bereitstellen einer Mischvorrichtung mit einem ersten Mischkammerabschnitt (3) und einem zweiten Mischkammerabschnitt (4), wobei der erste und zweite Mischkammerabschnitt (3, 4) eine jeweilige Mischkammerwand (8) aufweist, die einem Innenraum der Mischkammer (2) zugewandt ist,
- Bereitstellen eines vorgeformten Verkleidungselements (10), und
- Anordnen des Verkleidungselements (10) an einer Mischkammerwand (8) des zugehörigen Mischkammerabschnitts (3, 4).

11. Verfahren nach Anspruch 10, umfassend:
- Abtragen einer Oberfläche an einer Innenseite der Mischkammerwand (8) bis zu einer vorgegebenen Tiefe, und
- Anordnen des Verkleidungselements (10) an der abgetragenen Innenseite der Mischkammerwand (8).

12. Verfahren nach Anspruch 10 oder 11, bei dem das Anordnen des Verkleidungselements (10) an der Mischkammerwand (8) umfasst:
Befestigen des Verkleidungselements (10) an der Mischkammerwand (8) mittels Schweißen und/oder Schrauben.
